# EUROPEAN PATENT SPECIFICATION

(11) **EP 1 502 503 B1**
(45) Date of publication and mention of the grant of the patent: **16.01.2008**
(21) Application number: 03720988.9
(22) Date of filing: 28.04.2003
(51) Int. Cl.: A01K 87/00

(54) **FISHING ROD**
ANGELRUTE
CANNE A PECHE

(30) Priority: 01.05.2002 JP 2002130113
(43) Date of publication of application: 02.02.2005
(73) Proprietor: SHIMANO INC., Osaka 590-8577 (JP)
(72) Inventor: MORITA, Atsushi, Sakai-shi, Osaka 590-8577 (JP); KAWASHIMA, Koichi, Sakai-shi, Osaka 590-8577 (JP)
(74) Representative: Murnane, Graham John
(86) International application number: PCT/JP2003/005493
(87) International publication number: WO 2003/092372

(56) References cited:
- JP-A- 7 040 488
- JP-A- 7 298 809
- JP-A- 2000 189 005
- JP-A- 2000 198 154
- JP-B2- 3 154 805
- JP-B2- 4 027 028

## Description

### Technical Field

The present invention relates to a fishing rod used for fishing.

### Background Art

In general, a fishing rod used for fishing is composed of a rod body(bodies) which is/are tapered tubular member(s). Some types of fishing rods are composed of a plurality of connected rod bodies as one long fishing rod. With the other types of fishing rods, one long rod body is prepared, and the fishing rod is composed of only this one long rod body.

It is required that the rod body, which composes a fishing rod, is lightweight and has excellent mechanical strength, such as a shock resistance and bending characteristic. A rod body of a conventional fishing rod is produced by firing a core member which a fiber reinforced resin is wound around. The fiber reinforced resin is subjected to processing, and is formed of a material, which is produced by impregnating reinforced fiber, such as carbon fiber or glass fiber, with synthetic resin. This fiber reinforced resin is generally called as a "prepreg".

This prepreg is not limited to one type. There are various types of prepregs, such as a prepreg where the reinforced fiber is drawn to be aligned in the circumference direction of the core member, and a prepreg where the reinforced fiber is drawn to be aligned in the axial direction of the core member, in addition, a prepreg where the type of reinforced fiber itself or its modulus of elasticity is varied. Some types of them are suitably selected, or are laminated, thus, the rod body is produced. Winding or selectively employing a plurality of types of prepregs as mentioned above provides preferable strength and rigidity in circumference and axial directions of the rod body.

Recently various prepregs are provided. In carbon fiber prepregs where carbon fiber is employed as reinforcement fiber, various types of carbon fiber are employed, and the variety of prepreg is increased. There are carbon fiber (PAN group carbon fiber) where polyacrylonitrile is employed as a precursor and carbon fiber (pitch group carbon fiber) where mesophase pitch is employed as the precursor, though they are classified as the same carbon fiber, for example. Various prepregs concerning types of carbon fiber, their content, the moduli of elasticity of the carbon fiber, or the like, are employed in combination, and studied for satisfying requests for a fishing rod, such as light weight, shock resistance, bending characteristic, and durability.

For example, Japanese Patent No. 3154805 that is issued to the present applicant discloses tubular member, which composes the following fishing rod. This tubular member has an inner resin layer and an outer resin layer in which PAN group carbon fiber is oriented in the substantially circumference direction of the tubular member, and which are impregnated with the synthetic resin. An intermediate resin layer is formed between the inner and outer resin layers. With the intermediate resin layer, pitch group carbon fiber is oriented in the axial direction of the tubular member, and is impregnated with synthetic resin. The intermediate resin layer has a prescribed double-layer structure. Such combination of PAN group carbon fiber and pitch group carbon fiber provides an excellent bending strength.

However, currently available rod bodies cannot completely satisfy anglers' request, thus, further research and development is required. Particularly, a fishing rod is required to have a flexible bending characteristic so as not to be damaged even when a large load is applied in the case where a fish is caught on the tackle. But, when its bending characteristic is too flexible, the balance of a rod deteriorates in a normal state where a fish is not caught on the tackle. Accordingly, it has been required to provide a fishing rod with characteristics available for such contradictory requests.

It is an object of the present invention to provide a fishing rod with excellent operability and durability including a rod body with preferable characteristics.

### Disclosure of Invention

The present inventors have diligently studied to achieve the foregoing requests. As a result, they found that excellent mechanical characteristics can be provided by forming a rod body in which a pitch group prepreg and a PAN group prepreg are laminated and disposed at a prescribed rate. In addition, they have studied where the rod body with excellent characteristics should be arranged in the fishing rod, and so on, and finally found a preferable condition. The present invention has made based on the findings.

A fishing rod according to the present invention comprises a plurality of connected rod bodies which includes at least a base rod located on the furthest handle end side, a next base rod connected to the fore side of the base rod, and a rod body connected to the fore side of the next base rod. The next base rod includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of the first layer, and a third layer which is composed of a PAN group prepreg, in which PAN group carbon fiber is drawn to be aligned in the axial direction and is impregnated with synthetic resin similarly to the first layer, and is laminated on the outer peripheral surface side of the second layer. The content of the pitch group prepreg does not exceed the content of the PAN group prepregs in the next base rod in terms of the weight ratio of carbon fiber.

The next base rod of this fishing rod is a rod body having a prescribed laminated structure. The next base rod of the structure (hereinafter referred to as a "hybrid type"), which interposes the pitch group prepreg between the PAN group prepregs as mentioned above, has an outstanding feature as compared with the case where only a pitch group or only a PAN group is employed.

That is, bending initially increases in proportion to a load. But, when a load reaches a certain amount, bending increases with deviating from the proportional line of load and bending until the certain amount of load. In other words, when a certain amount or more of weight is applied, the elasticity reduces, and the rigidity against bending reduces (the bending characteristic increases).

The load applied on a fishing rod is a load from a fish caught on the tackle connected to the end of a fishing line. An issue that how to bear the load and that which rod body should bear the load when a fish is caught arises.

From this point of view, in considering fishing operation in an actual fishing place, the load applied on a fishing rod can be considered to be mainly divided into two states. Namely, there are a case where a large load is applied to a rod body when a fish is caught on the tackle (referred to as a "first state"), and a case where a load is applied by only the tackle when a fish is not caught on the tackle (referred to as a "second state"). In the first state, it is found that a rod body with a small diameter located on the fore side becomes linear in the direction that a fishing line is pulled, while a rod body on the handle end side, particularly in the vicinity of the next base rod, is bent very much, and thus bears the load from the tackle. On the other hand, in the second state, only the rod body with a small diameter located in the fore side is mainly bent, and only the rod body on the fore side bears the load.

In the second state, in terms of ease of operation of a fishing rod or sensitivity to a fish hit, it is preferable that a lightweight rod body with relatively high rigidity with respect to its weight is employed as the rod body on the fore side. In the second state, in order for the rod body on the fore side to respond to operation of the rod body on the handle end side, it is preferable that a rod body with relatively high rigidity is also employed as the rod body on the rod end side. On the other hand, in the first state, since a fish pulls a fishing line while quickly changing their speed and force, it is preferable to use a rod body as flexible (low rigidity) as possible.

Accordingly, with this fishing rod, a hybrid type rod body is employed as the next base rod. Thus, in the first state, the next base rod provides high rigidity that rivals other fishing rods, and the balance of the whole fishing rod is maintained. On the other hand, in the state where a large load is applied to the next base rod when a fish is caught on tackle, "flexibility" of the next base rod is increased, thus, the next base rod is prevented from being broken or damaged when bearing the load. In addition, since the durability of the rod body reduces depending on the combination of the pitch group and PAN group prepregs, the content of the pitch group prepreg does not exceed that of the PAN group prepregs in this next base rod. These characteristics will be described later in embodiments.

In a fishing rod according to another aspect, the base rod also includes the first to third layers additionally to the next base rod, and the content of the pitch group prepreg does not exceed the content of the PAN group prepregs in terms of the weight ratio of carbon fiber.

With this fishing rod, a hybrid type rod body similar to the next base rod is employed as the base rod located on the furthest handle end side additionally to the next base rod. Since the base rod, which mostly bears a load together with the next base rod when a fish is caught on the tackle, has a structure similar to the next base rod, it is possible to prevent from breaking or damaging.

A fishing rod according to another aspect comprises a single rod body. The single rod body includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of the first layer, and a third layer which is composed of a PAN group prepreg, in which PAN group carbon fiber is drawn to be aligned in the axial direction and is impregnated with synthetic resin similarly to the first layer, and is laminated on the outer peripheral surface side of the second layer, in at least one half range on the rod base side in the axial direction. The content of the pitch group prepreg does not exceed the content of the PAN group prepregs in the next base rod in terms of the weight ratio of carbon fiber.

A fishing rod according to another aspect comprises a hollow rod body located on the handle end side, and a solid rod body connected to the fore side of the hollow rod body. This hollow rod body includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of said first layer, and a third layer which is composed of a PAN group prepreg, in which PAN group carbon fiber is drawn to be aligned in the axial direction and is impregnated with synthetic resin similarly to said first layer, and is laminated on the outer peripheral surface side of said second layer. The content of the pitch group prepreg does not exceed the content of the PAN group prepregs in the hollow rod body in terms of the weight ratio of carbon fiber.

The PAN group prepregs, which compose these first and third layers, can have moduli of tensile elasticity of 30 to 35 t/mm² of the carbon fiber oriented in their axial directions, and the pitch group prepreg, which composes the second layer, can have a modulus of tensile elasticity of 50 to 60 t/mm² of the carbon fiber oriented in its axial direction.

The modulus of elasticity of the carbon fiber, which composes the PAN group prepreg and the pitch group prepreg, is adjusted within a prescribed range, thus, sufficient durability can be maintained.

The ratio of these first, second and third layers can be 1:1:2 in terms of the weight ratio of carbon fiber contained therein.

### Brief Description of Drawings

Fig. 1 is a view showing the whole fishing rod according to a first embodiment.
Fig. 2 is an enlarged cross-sectional view of the next base rod 2 of Fig. 1.
Fig. 3 is a view showing a manufacturing process of the next base rod 2 of Fig. 1.
Fig. 4 is a view showing a whole fishing rod according to a second embodiment.
Fig. 5 is a view showing a modified fishing rod according to the second embodiment of the present invention.

### Best Mode for Carrying out the Invention

### First Embodiment

Hereafter, a fishing rod according to a first embodiment of the present invention is described with reference to the drawings.

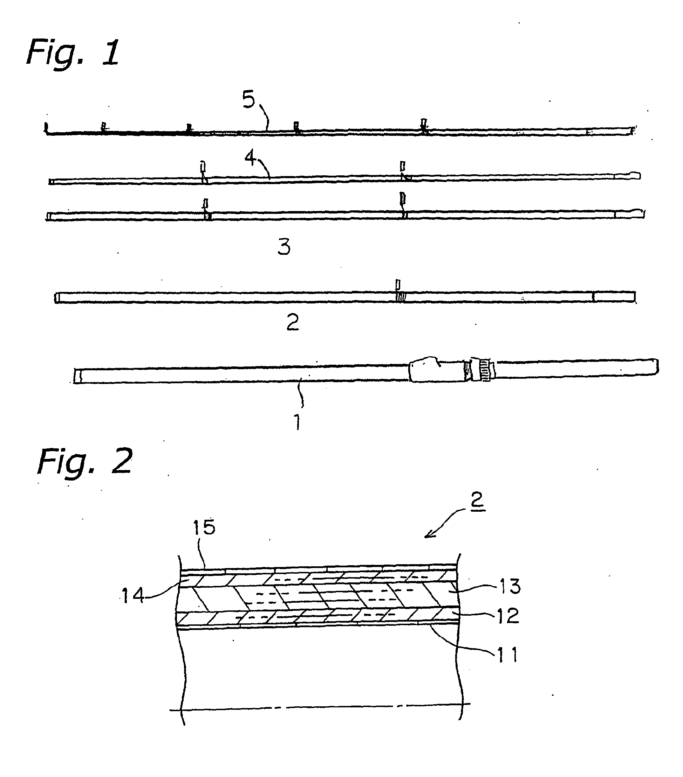

This fishing rod comprises a plurality of rod bodies, for example, five rod bodies, which are successively connected in a split-mounted manner, as shown in Fig. 1. That is, the fishing rod includes a base rod 1 which is located on the furthest rod base end side and has a large diameter, and a next base rod 2, an intermediate rod 3, a next fore end rod 4 and a fore end rod 5 which are successively connected to the fore side thereof. The reel seat onto which a reel is attached is arranged on the base rod 1. Fishing line guides for guiding a fishing line from the reel attached onto the reel seat is arranged on the outer periphery of each rod body. These rod bodies are tapered tubular member composed of reinforced fiber, such as carbon fiber or glass fiber, which is impregnated with synthetic resin. Specifically, the next base rod 2 and the base rod 1 have a hybrid type structure described later. The end of fore side and the end of rod base end side of each rod body can be mutually fitted, respectively. When the rod bodies are successively pulled out, they are fitted and thus can be secured to each other. A grip, which is grasped by an angler, can be provided on the rod base end part end of the base rod 1. A bottom cap is detachably attached to the rod base end of the base rod 1.

Although the number of the connected rod bodies in this fishing rod is five, the number of the rod bodies is not limited to this.

The next base rod 2 is now described as an example of the concrete structure of the base rod 1 and the next base rod 2. As shown in Fig. 2, the next base rod 2 is a tapered tubular member, and has a structure in which an innermost layer 11, a first PAN group layer 12, a pitch group layer 13, a second PAN group layer 14, and an outermost layer 15 are laminated from the interior side.

The innermost layer 11 is a layer located in the innermost of the tubular member, and is composed of fiber reinforced resin, which is formed of a prepreg material produced by impregnating reinforced fiber, such as carbon fiber or glass fiber, with synthetic resin and is processed in a tape shape. The reinforced fiber, such as carbon fiber, is oriented in the longitudinal direction of the tape. As a result, the reinforced fiber is oriented in the circumferential direction of the next base rod 2. The "circumferential direction" refers to the direction of the circumference of the cross section perpendicular to the direction of the axial length of the rod body, and includes the direction that is diagonal to the axial direction from the direction of the circumference to a certain extent. That is, the "circumferential direction" also includes the direction of orientation of the reinforced fiber in the case where the tape is spirally arranged on the rod body as mentioned above.

The first PAN group layer 12 is composed of a prepreg material, which is produced by impregnating PAN group carbon fiber with epoxy resin after drawn to be aligned and is processed in a sheet shape. The PAN group carbon fiber is oriented in the axial direction of the next base rod 2. The modulus of tensile elasticity of this carbon fiber is 30 to 35 t/mm², preferably 32.5 t/mm².

The pitch group layer 13 is composed of a prepreg material, which is produced by impregnating pitch group carbon fiber with epoxy resin after drawn to be aligned and is processed in a sheet shape. The pitch group carbon fiber is also oriented in the axial direction of the next base rod 2. The modulus of tensile elasticity of this carbon fiber is 50 to 55 t/mm², preferably 53 t/mm².

The second PAN group layer 14 is a layer similar to the first PAN group layer 12. The ratio of these the first PAN group layer 12, the pitch group layer 13, and the second PAN group layer 14 are 1:1:2 in terms of the weight ratio of carbon fiber contained therein. As the process is described later in more detail, when the ratio of the wound number of the PAN group prepreg sheet, which composes the first PAN group layer 12 to the core member, the wound number of the pitch group prepreg sheet, which composes the picth group layer 13 to the core member, and the wound number of the PAN group prepreg sheet, which composes the second PAN group layer 14 to the core member is 1:1:2, the above weight ratio can be obtained.

The outermost layer 15 is a layer located in the innermost of the tubular member, and is composed of fiber reinforced resin, which is formed of a prepreg material produced by impregnating reinforced fiber, such as carbon fiber or glass fiber, with synthetic resin and is processed in a tape shape. The reinforced fiber, such as carbon fiber, is oriented in the longitudinal direction of the tape. As a result, the reinforced fiber is oriented in the circumferential direction of the next base rod 2, similarly to the foregoing innermost layer 11.

A similar laminated structure should be adopted in the base rod 1.

The intermediate rod 3 through the fore end rod 5 have a structure similar to a conventional rod body. They are formed of single prepreg materials without employing such a hybrid type structure of PAN group and pitch group prepregs in the next base rod 2 or the base rod 1 as mentioned above. For example, the intermediate rod 3 can have the following laminated structure as an example. The structure has a layer, which is composed of a tape-shaped prepreg as an innermost layer and includes the carbon fiber oriented in the circumferential direction, a layer, in which a sheet-shaped prepreg composed of PAN group carbon fiber is wound around the outer periphery and the PAN group carbon fiber is oriented in the axial direction, and a layer, which is composed of a tape-shaped prepreg and includes the carbon fiber oriented in the circumferential direction, on the outer periphery. In addition, not a hollow tubular body but a solid rod body may be used as the fore end rod 5 whose diameter is the smallest.

Next, a method for producing the next base rod 2 is described.

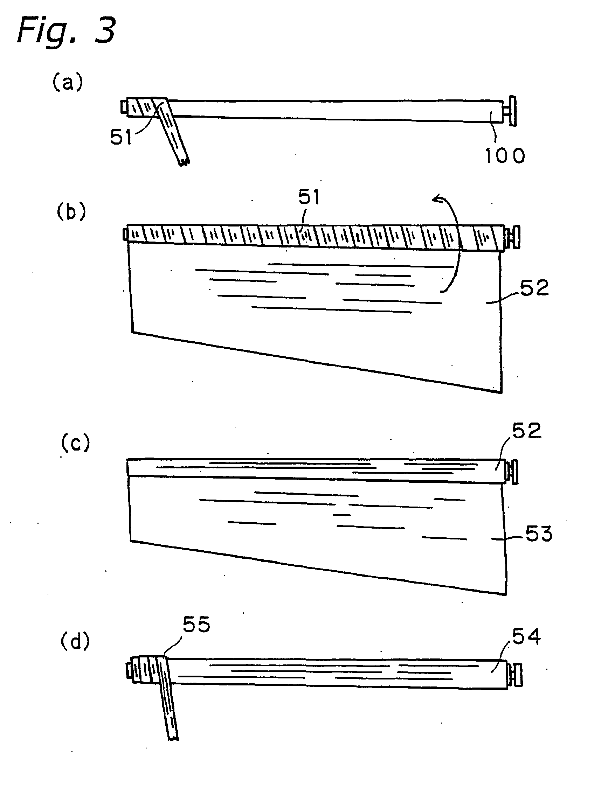

As schematically shown in Fig. 3 (a), a tapered tubular mandrel (core member) 100 where a prescribed taper is formed is prepared. A release agent or the like is applied to the outer periphery when necessary. A tape for peel-off (not shown) composed of polypropylene or the like is spirally wound around the outer periphery. A prepreg tape 51 is spirally wound without the space around the outer periphery where the tape for the peel-off is wound when necessary as mentioned above. This prepreg tape 51 is a tape in which the carbon fiber is drawn to be aligned in the longitudinal direction of the tape, and composes the foregoing innermost layer 11.

Subsequently, as shown in Fig. 3 (b), a PAN group prepreg sheet 52 is wound around the outer periphery of the prepreg tape 51. The PAN group prepreg sheet 52 is composed of a prepreg material, which is produced by impregnating PAN group carbon fiber with epoxy resin after drawn to be aligned in the longitudinal direction (the axial direction of the mandrel 50) and is processed in a sheet shape. The modulus of tensile elasticity of this PAN group carbon fiber is 30 to 35 t/mm². The PAN group prepreg sheet 52 is wound only 1 to 2 turn(s). This PAN group prepreg sheet 52 composes the foregoing first PAN group layer 12.

As shown in Fig. 3 (c), a pitch group prepreg sheet 53 is wound around the outer periphery of the wound PAN group prepreg sheet 52. The pitch group prepreg sheet 53 is composed of a prepreg material, which is produced by impregnating pitch group carbon fiber with epoxy resin after drawn to be aligned in the longitudinal direction and is processed in a sheet shape. The modulus of tensile elasticity of this pitch group carbon fiber is 50 to 55 t/mm². The pitch group prepreg sheet 53 is wound the same turns as the foregoing PAN group prepreg sheet 52. This pitch group prepreg sheet 53 composes the foregoing pitch group layer 13.

Further, as shown in Fig. 3 (d), a PAN group prepreg sheet 54 similar to the foregoing PAN group prepreg sheet 52 is wound around the outer periphery of the wound pitch group prepreg sheet 53. In this case, the wound number is twice the turns as compared with the pitch group prepreg sheet 53. This PAN group prepreg sheet 54 composes the foregoing second PAN group layer 14.

Furthermore, a prepreg tape 55, which is the same type of the foregoing prepreg tape 51 is spirally wound around the outer periphery surface without space. Then, the protection tape composed of polypropylene or the like is wound while pressure is applied on these outer peripheries when necessary. This is burned in a furnace. Thus, each prepreg material is hardened, and the prepreg materials are integrally formed. After that, the mandrel 100 is removed. The length is appropriately adjusted by cutting the both edges so as to even up the both edges. The protection tape on the outer peripheral surface and the peel-off tape on the inner peripheral surface are peeled off. The outer periphery is polished for smoothing. Necessary surface coating is performed. Consequently, the next base rod 2 is produced.

The base rod 1 can be also produced in a similar manner.

With the fishing rod including the next base rod 2 and the base rod 1, in the normal state, the fore end rod 4 through the base rod 1 are successively bent in a continuous bending degree depending on the diameters of the fore end rod 4 through the base rod 1. Accordingly, preferable balance of the rod is maintained. On the other hand, in the case where a large load is applied to each rod body when a fish is caught on the tackle, if a certain amount or more of load is applied, the bending characteristics of the next base rod 2 and base rod 1, which mostly bear the load, nonlinearly increases. Therefore, it is possible to preferably pull out a fish without damaging the rod body.

### Second Embodiment

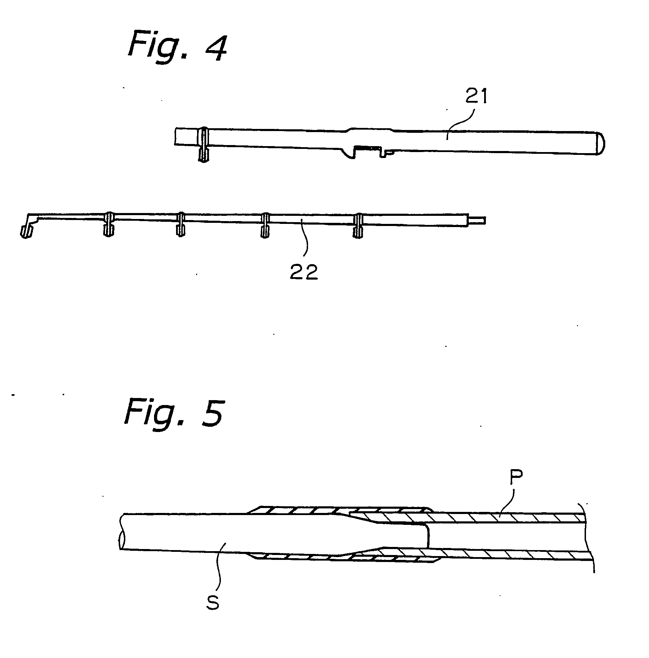

A second embodiment of the present invention is described with reference to Fig. 4.

As shown in Fig. 4, this fishing rod comprises two rod bodies of a pipe-shaped base rod 21 and a fore end rod 22 connected to the fore side of the base rod 21. A reel seat, to which a reel can be attached, is arranged on the base rod 21 located on the rod base end side. These rod bodies are tapered tubular member composed of reinforced fiber, such as carbon fiber or glass fiber, which is impregnated with synthetic resin, and has a hybrid type structure similar to the next base rod in the foregoing first embodiment.

The fore end rod 22 is a tapered solid cylindrical member. A connecting portion, to which the fore side of the base rod 21 is inserted and connected, is formed at the rod base end thereof. A top guide is attached at the tip of the fore end rod 22. A plurality of fishing line guides are also attached onto the outer periphery so as to be spaced from each other at a interval in the axial direction.

The fore end rod 22 is produced as follows, for example. In the state that prescribed glass fiber is impregnated with the synthetic resin, a cylindrical glass solid is formed by pultrusion. The glass solid is subjected to a tapering process so that its diameter becomes small toward the tip. In addition, the connecting portion is formed by grinding the end of rod base side.

In the fore end rod 22, a single rod body, which is formed by connecting and securing two rod bodies to each other with an adhesive agent, can be used as a modified example. For example, the rod body includes a solid body S which composes the fore side part, and a hollow pipe body P which composes the rod base end side part. The length of the solid body S is about 10 to 30% of the axial direction length of the whole fore end rod 22. As shown in Fig. 5, the solid body and the hollow pipe body R of this type are secured after connected to each other with an adhesive agent. The outer peripheries of the solid body S through the pipe body P can be processed so as to be continuously coated. Thus, they look as if a one-piece rod body. When such two parts composes the fore end rod 22, a hybrid type structure may be adopted in the pipe body P.

### Other Embodiments

Although the fishing rod according to each foregoing embodiment is composed of a plurality of connected rod bodies, needless to say, the present invention is applicable to a fishing rod is composed of only a single rod body. In this case, the foregoing hybrid structure is adopted in at least one half range on the rod base side of the single rod body, which composes the fishing rod, in the axial direction.

However a fishing rod according to the present invention is not limited to each foregoing embodiment. The technical idea will be apparent with reference to the following examples.

### Examples

Hereafter, in the present invention, examples are described.

### Endurance Test

Test for evaluating the durability were performed on rod bodies with laminated carbon fiber reinforced resin employing each of pitch group and PAN group carbon fiber.

### Example 1

A fishing rod composed of five rod bodies, which were connected in the order of a first rod (#1), a second rod (#2), and so on, from the fore side, was prepared. The fishing rod had an entire length of 5.3 m, and included a fifth rod (#5) as the base rod. #4 (next base rod) and #5 (base rod) were hybrid type rod bodies in which pitch group and PAN group carbon fiber were laminated. Other rod bodies were formed of only prepregs composed of PAN group carbon fiber.

#4 and #5 are hybrid types with the following structures, respectively.
· Innermost layer: A circumferential direction fiber layer composed of prepreg tape. Fiber weight basis 55 g/mm², modulus of tensile elasticity 30 t/mm².
· First PAN group layer: Fiber weight basis 150 g/mm², entire weight basis 200 g/mm², modulus of tensile elasticity 30 t/mm², PAN group carbon fiber was oriented in the axial direction.
· Pitch group layer: 150 g/mm², entire weight basis 200 g/mm², modulus of tensile elasticity 52 t/mm², PAN group carbon fiber was oriented in the axial direction.
· Second PAN group layer: (The case of #4; Fiber weight basis 150 g/mm², entire weight basis 200 g/mm², modulus of tensile elasticity 32.5 t/mm², PAN group carbon fiber was oriented in the axial direction.) (The case of #5; Fiber weight basis 150 g/mm², entire weight basis 200 g/mm², modulus of tensile elasticity 30 t/mm², PAN group carbon fiber was oriented in the axial direction.)
· Outermost layer: A circumferential direction fiber layer composed of prepreg tape. Fiber weight basis: 55 g/mm², modulus of tensile elasticity: 30 t/mm².
· First PAN group layer: pitch group layer: second PAN group layer = 1:1:2 (ratio of the number of laminated layers)

With the fishing rod, a test in which a load was applied onto the tip of the fore side of #1 (the maximum durability test), and a test in which a constant load was repeatedly applied (durability test) were performed in the state where the end of handle end side of #5 was secured, and #1 inclined at the angle of 45° relative to the level surface.

As an applied load on the tip of the fore side of #1 increased, the fishing rod begun to be broken at 46 N. The cyclic test, in which 22.5 N of load was repeatedly applied and removed, was performed. Even after 10,000 cycles, the fishing rod was not broken.

### Comparative Example 1

Similarly to the above example 1, a fishing rod composed of five rod bodies, which were connected in the order of a first rod (#1), a second rod (#2), and so on, from the fore side, was prepared. The fishing rod had an entire length of 5.3 m, and included a fifth rod (#5) as the base rod. #4 (next base rod) and #5 (base rod) were hybrid type rod bodies in which pitch group and PAN group carbon fiber were laminated. Other rod bodies were formed of only prepregs composed of PAN group carbon fiber.

#4 and #5 are hybrid types with the following structures, respectively.
· Innermost layer: A circumferential direction fiber layer composed of prepreg tape (layer similar to the above example 1)
· First PAN group layer: Fiber weight basis 150 g/mm², entire weight basis 200 g/mm², modulus of tensile elasticity 24 t/mm², PAN group carbon fiber was oriented in the axial direction.
· Pitch group layer: 150 g/mm², entire weight basis 200 g/mm², modulus of tensile elasticity 53 t/mm², PAN group carbon fiber was oriented in the axial direction.
· Second PAN group layer: Fiber weight basis 150 g/mm², entire weight basis 200 g/mm², modulus of tensile elasticity 24 t/mm², PAN group carbon fiber was oriented in the axial direction.
· Outerermost layer: A circumferential direction fiber layer composed of prepreg tape (layer similar to the above example 1)
· First PAN group layer: pitch group layer: second PAN group layer = 1:2:1 (ratio of the number of laminated layers)

In this comparative example 1, in order that the first and second PAN group layers may adjust the entire flexural rigidity corresponding to the increase in the pitch group layer, respectively, a material with lower modulus of elasticity as compared with the example 1 is used.

With the fishing rod, a test in which a load was applied onto the tip of the fore side of #1 (the maximum durability test), and a test in which a constant load was repeatedly applied (durability test) were performed in the state where the handle end side end of #5 was secured, and #1 inclined at the angle of 45° relative to the level surface.

As an applied load on the tip of the fore side of #1 increased, the fishing rod begun to be broken at 46 N. The cyclic test, in which 22.5 N of load was repeatedly applied and removed, was performed. The fishing rod was broken at 70 cycles.

Even in the hybrid structure in which the pitch group carbon fiber reinforced resin was sandwiched between the PAN group carbon fiber reinforced resins, it was found that deferent ratios of them resulted large difference of durability. Difference was not observed in maximum durability. But, remarkable difference was observed in cyclic durability. That is, when pitch group prepreg was included more than PAN group prepregs, cyclic durability remarkably decreased.

### Test for Rod Body Arrangement

The arrangement characteristics of a hybrid type rod body in which pitch group and PAN group carbon fiber were laminated in rod bodies were evaluated.

A fishing rod composed of five rod bodies, which were connected in the order of a first rod (#1), a second rod (#2), and so on, from the fore side, was prepared. The fishing rod had an entire length of 5.3 m, and included a fifth rod (#5) as the base rod. Particularly, as for #3 to #5, hybrid type rod bodies, in which the pitch group and group carbon fiber were laminated, were used in the combinations shown in the following table 1.

These fishing rods were tested as follows. In the state where each of weights (1000, 1500, and 2500 g) were attached to the fore side end of #1, respectively, the fishing rod was put on the level surface. After that, the tip of #1 was gradually inclined from the level surface around the base end of #5. Then, the angle between the level surface and #5 was measured when the weight came out of contact with the level surface. The following table 1 showed the results.

**TABLE 1**

| Sample No. | Adoption of Hybrid Type Rod Body | | | Load/Angle (°) | | |
|---|---|---|---|---|---|---|
| | #3 | #4 | #5 | 1000(g) | 1500(g) | 2500(g) |
| 1 | Adopted | Adopted | Adopted | 38 | 50 | 69 |
| 2 | Not Adopted | Adopted | Adopted | 39 | 49 | 69 |
| 3 | Not Adopted | Adopted | Not Adopted | 37 | 47 | 65 |
| 4 | Not Adopted | Not Adopted | Adopted | 38 | 47 | 64 |
| 5 | Not Adopted | Not Adopted | Not Adopted | 36 | 45 | 61 |

The table 1 clearly showed that the bending characteristic of the fishing rod increased in the case where the hybrid type rod body was adopted in any of #4 and #5 as compared with the case where the hybrid type rod body was not adopted in any of #3 to #5 (sample 5). Furthermore, in the case where the hybrid type rod bodies was adopted in both #4 and #5 (sample 2), improvement in the bending characteristic was observed particularly in 2500 g of load as compared with the case where the hybrid type rod body was adopted in one of #4 and #5. However, even when the hybrid type was additionally adopted in #3, remarkable improvement in the bending characteristic was not observed.

### Industrial Applicability

With a fishing rod according to the present invention, in the state that a large load is not applied, each rod body provides continuous "bending", thus, the balance of the rod is maintained. When a large load is applied, the rod body on the handle end side, which mostly bears the load, greatly bends. Accordingly, damage can be prevented. Therefore, the present invention can provide a fishing rod with excellent characteristics.

## Claims

1. A fishing rod comprising a plurality of connected rod bodies which includes at least a base rod located on the furthest handle end side; a next base rod connected to the fore side of said base rod; and a rod body connected to the fore side of said next base rod, wherein
only said next base rod includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of said first layer, and a third layer which is composed of a PAN group prepreg, in which PAN group carbon fiber is drawn to be aligned in the axial direction and is impregnated with synthetic resin similarly to said first layer, and is laminated on the outer peripheral surface side of said second layer, wherein
the content of the pitch group prepreg does not exceed the content of the PAN group prepregs in said next base rod in terms of the weight ratio of carbon fiber.

2. The fishing rod set forth in claim 1, wherein said base rod also includes the above first to third layers additionally to said next base rod, and the content of the pitch group prepreg does not exceed the content of the PAN group prepregs in said base rod in terms of the weight ratio of carbon fiber.

3. A fishing rod comprising a single rod body, wherein
said rod body includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of said first layer, and a third layer which is composed of a PAN group prepreg, in which PAN group carbon fiber is drawn to be aligned in the axial direction and is impregnated with synthetic resin similarly to said first layer, and is laminated on the outer peripheral surface side of said second layer, in one half range on the rod base side in the axial direction, wherein
the content of the pitch group prepreg does not exceed the content of the PAN group prepregs in said next base rod in terms of the weight ratio of carbon fiber.

4. A fishing rod comprising a hollow rod body located on the handle end side, and a solid rod body connected to the fore side of said hollow rod body, wherein
said hollow rod body includes a first layer which is composed of a PAN group prepreg, in which PAN group carbon fiber is drawn to be aligned in the axial direction and is impregnated with synthetic resin, and is located on the inner peripheral surface side, a second layer which is composed of a pitch group prepreg, in which pitch group carbon fiber is drawn to be aligned in the axial direction and is impregnated with synthetic resin, and is laminated on the outer peripheral surface side of said first layer, and a third layer which is composed of a PAN group prepreg, in which PAN group carbon fiber is drawn to be aligned in the axial direction and is impregnated with synthetic resin similarly to said first layer, and is laminated on the outer peripheral surface side of said second layer, wherein
the content of the pitch group prepreg does not exceed the content of the PAN group prepregs in said solid rod body in terms of the weight ratio of carbon fiber.

5. The fishing rod set forth in any of claims 1 to 4, wherein
the PAN group prepregs, which compose said first and third layers, has moduli of tensile elasticity of 30 to 35 t/mm² of the carbon fiber oriented in their axial directions, and the pitch group prepreg, which composes said second layer, has a modulus of tensile elasticity of 50 to 60 t/mm² of the carbon fiber oriented in its axial direction.

6. The fishing rod set forth in any of claims 1 to 4, wherein the ratio of said first, second and third layers is 1:1:2 in terms of the weight ratio of carbon fiber contained therein.

## Patentansprüche

1. Eine Angelrute, die eine Vielzahl von verbundenen Rutenkörpern beinhaltet, die mindestens eine Basisrute, die sich auf der am weitesten entfernten Endseite des Griffs befindet; eine nächste Basisrute, die mit der vorderen Seite der Basisrute verbunden ist; und einen Rutenkörper, der mit der vorderen Seite der nächsten Basisrute verbunden ist, umfasst, wobei
lediglich die nächste Basisrute eine erste Schicht, die aus einem Propreg der PAN-Gruppe zusammengesetzt ist, wobei die Kohlenstofffaser der PAN-Gruppe verstreckt wird, um in der axialen Richtung ausgerichtet zu sein, und mit Kunstharz imprägniert wird und sich auf der inneren peripheren Oberflächenseite befindet, eine zweite Schicht, die aus einem Prepreg der Pech-Gruppe zusammengesetzt ist, wobei die Kohlenstofffaser der Pech-Gruppe verstreckt wird, um in der axialen Richtung ausgerichtet zu sein, und mit Kunstharz imprägniert wird und auf die äußere periphere Oberflächenseite der ersten Schicht laminiert wird, und eine dritte Schicht, die aus einem Prepreg der PAN-Gruppe zusammengesetzt ist, umfasst, wobei die Kohlenstofffaser der PAN-Gruppe verstreckt wird, um in der axialen Richtung ausgerichtet zu sein, und ähnlich der ersten Schicht mit Kunstharz imprägniert wird und auf die äußere periphere Oberflächenseite der zweiten Schicht laminiert wird, wobei
der Gehalt des Prepregs der Pech-Gruppe den Gehalt der Prepregs der PAN-Gruppe in der nächsten Basisrute mit Bezug auf das Gewichtsverhältnis der Kunststofffaser nicht übersteigt.

2. Angelrute gemäß Anspruch 1, wobei die Basisrute zusätzlich zu der nächsten Basisrute ebenfalls die obige erste bis dritte Schicht umfasst und der Gehalt des Prepregs der Pech-Gruppe den Gehalt der Prepregs der PAN-Gruppe in der Basisrute mit Bezug auf das Gewichtsverhältnis der Kohlenstofffaser nicht übersteigt.

3. Angelrute, die einen einzelnen Rutenkörper beinhaltet, wobei
der Rutenkörper eine erste Schicht, die aus einem Prepreg der PAN-Gruppe zusammengesetzt ist, wobei die Kohlenstofffaser der PAN-Gruppe verstreckt wird, um in der axialen Richtung ausgerichtet zu sein, und mit Kunstharz imprägniert wird und sich auf der inneren peripheren Oberflächenseite befindet, eine zweite Schicht, die aus einem Prepreg der Pech-Gruppe zusammengesetzt ist, wobei die Kohlenstofffaser der Pech-Gruppe verstreckt wird, um in der axialen Richtung ausgerichtet zu sein, und mit Kunstharz imprägniert wird und auf die äußere periphere Oberflächenseite der ersten Schicht laminiert wird, und eine dritte Schicht, die aus einem Prepreg der PAN-Gruppe zusammengesetzt ist, umfasst, wobei die Kohlenstofffaser der PAN-Gruppe verstreckt wird, um in der axialen Richtung ausgerichtet zu sein, und ähnlich der ersten Schicht mit Kunstharz imprägniert wird und auf die äußere periphere Oberflächenseite der zweiten Schicht laminiert wird, in einen Halbbereich auf der Basisseite der Rute in der axialen Richtung, wobei
der Gehalt des Prepregs der Pech-Gruppe den Gehalt der Prepregs der PAN-Gruppe in der nächsten Basisrute mit Bezug auf das Gewichtsverhältnis der Kunststofffaser nicht übersteigt.

4. Angelrute, die einen hohlen Rutenkörper, der sich auf der Endseite des Griffs befindet, und einen festen Rutenkörper, der mit der vorderen Seite des hohlen Rutenkörpers verbunden ist, beinhaltet, wobei
der hohle Rutenkörper eine erste Schicht, die aus einem Prepreg der PAN-Gruppe zusammengesetzt ist, wobei die Kohlenstofffaser der PAN-Gruppe verstreckt wird, um in der axialen Richtung ausgerichtet zu sein, und mit Kunstharz imprägniert wird und sich auf der inneren peripheren Oberflächenseite befindet, eine zweite Schicht, die aus einem Prepreg der Pech-Gruppe zusammengesetzt ist, wobei die Kohlenstofffaser der Pech-Gruppe verstreckt wird, um in der axialen Richtung ausgerichtet zu sein, und mit Kunstharz imprägniert wird und auf die äußere periphere Oberflächenseite der ersten Schicht laminiert wird, und eine dritte Schicht, die aus einem Prepreg der PAN-Gruppe zusammengesetzt ist, umfasst, wobei die Kohlenstofffaser der PAN-Gruppe verstreckt wird, um in der axialen Richtung ausgerichtet zu sein, und ähnlich der ersten Schicht mit Kunstharz imprägniert wird und auf die äußere periphere Oberflächenseite der zweiten Schicht laminiert wird, wobei
der Gehalt des Prepregs der Pech-Gruppe den Gehalt der Prepregs der PAN-Gruppe in dem festen Rutenkörper mit Bezug auf das Gewichtsverhältnis der Kunststofffaser nicht übersteigt.

5. Angelrute gemäß einem der Ansprüche 1 bis 4, wobei
die Prepregs der PAN-Gruppe, die die erste und die dritte Schicht zusammensetzen, Moduln einer Zugelastizität von 30 bis 35 t/mm² der Kohlenstofffaser, die in ihre axialen Richtungen orientiert ist, aufweisen und das Prepreg der Pech-Gruppe, das die zweite Schicht zusammensetzt, ein Modul einer Zugelastizität von 50 bis 60 t/mm² der Kohlenstofffaser, die in ihre axiale Richtung orientiert ist, aufweist.

6. Angelrute gemäß einem der Ansprüche 1 bis 4, wobei das Verhältnis der ersten, zweiten und dritten Schicht mit Bezug auf das Gewichtsverhältnis der hierin enthaltenen Kohlenstofffaser 1:1:2 ist.

## Revendications

1. Une canne à pêche comprenant une pluralité de corps de canne raccordés qui inclut au moins une canne de base située sur le côté extrémité de poignée le plus éloigné ; une canne de base suivante raccordée au côté avant de ladite canne de base ; et un corps de canne raccordé au côté avant de ladite canne de base suivante, dans laquelle
seule ladite canne de base suivante inclut une première couche qui est composée d'un préimprégné du groupe PAN, dans laquelle de la fibre de carbone du groupe PAN est étirée de façon à être alignée dans la direction axiale et est imprégnée de résine synthétique, et est située sur le côté surface périphérique interne, une deuxième couche qui est composée d'un préimprégné du groupe poix, dans laquelle de la fibre de carbone du groupe poix est étirée de façon à être alignée dans la direction axiale et est imprégnée de résine synthétique, et est disposée sur le côté surface périphérique externe de ladite première couche, et une troisième couche qui est composée d'un préimprégné du groupe PAN, dans laquelle de la fibre de carbone du groupe PAN est étirée de façon à être alignée dans la direction axiale et est imprégnée de résine synthétique de façon similaire à ladite première couche, et est disposée sur le côté surface périphérique externe de ladite deuxième couche, dans laquelle
la teneur en préimprégné du groupe poix ne dépasse pas la teneur en préimprégnés du groupe PAN dans ladite canne de base suivante en termes de rapport de poids de fibre de carbone.

2. La canne à pêche énoncée dans la revendication 1, dans laquelle ladite canne de base inclut également les première à troisième couches ci-dessus en plus de ladite canne de base suivante, et la teneur en préimprégné du groupe poix ne dépasse pas la teneur en préimprégnés du groupe PAN dans ladite canne de base en termes de rapport de poids de fibre de carbone.

3. Une canne à pêche comprenant un corps de canne unique, dans laquelle
ledit corps de canne de base inclut une première couche qui est composée d'un préimprégné du groupe PAN, dans laquelle de la fibre de carbone du groupe PAN est étirée de façon à être alignée dans la direction axiale et est imprégnée de résine synthétique, et est située sur le côté surface périphérique interne, une deuxième couche qui est composée d'un préimprégné du groupe poix, dans laquelle de la fibre de carbone du groupe poix est étirée de façon à être alignée dans la direction axiale et est imprégnée de résine synthétique, et est disposée sur le côté surface périphérique externe de ladite première couche, et une troisième couche qui est composée d'un préimprégné du groupe PAN, dans laquelle de la fibre de carbone du groupe PAN est étirée de façon à être alignée dans la direction axiale et est imprégnée de résine synthétique de façon similaire à ladite première couche, et est disposée sur le côté surface périphérique externe de ladite deuxième couche, sur une étendue de moitié sur le côté base de canne dans la direction axiale, dans laquelle
la teneur en préimprégné du groupe poix ne dépasse pas la teneur en préimprégnés du groupe PAN dans ladite canne de base suivante en termes de rapport de poids de fibre de carbone.

4. Une canne à pêche comprenant un corps de canne creux situé sur le côté extrémité de poignée, et un corps de canne plein raccordé au côté avant dudit corps de canne creux, dans laquelle
ledit corps de canne creux inclut une première couche qui est composée d'un préimprégné du groupe PAN, dans laquelle de la fibre de carbone du groupe PAN est étirée de façon à être alignée dans la direction axiale et est imprégnée de résine synthétique, et est située sur le côté surface périphérique interne, une deuxième couche qui est composée d'un préimprégné du groupe poix, dans laquelle de la fibre de carbone du groupe poix est étirée de façon à être alignée dans la direction axiale et est imprégnée de résine synthétique, et est disposée sur le côté surface périphérique externe de ladite première couche, et une troisième couche qui est composée d'un préimprégné du groupe PAN, dans laquelle de la fibre de carbone du groupe PAN est étirée de façon à être alignée dans la direction axiale et est imprégnée de résine synthétique de façon similaire à ladite première couche, et est disposée sur le côté surface périphérique externe de ladite deuxième couche, dans laquelle
la teneur en préimprégné du groupe poix ne dépasse pas la teneur en préimprégnés du groupe PAN dans ledit corps de canne solide en termes de rapport de poids de fibre de carbone.

5. La canne à pêche énoncée dans n'importe lesquelles des revendications 1 à 4, **dans laquelle**
les préimprégnés du groupe PAN, qui composent lesdites première et troisième couches, présentent des modules d'élasticité en traction allant de 30 to 35 t/mm² de la fibre de carbone orientée dans leurs directions axiales, et le préimprégné du groupe poix, qui compose ladite deuxième couche, a un module d'élasticité en traction allant de 50 to 60 t/mm² de la fibre de carbone orientée dans sa direction axiale.

6. La canne à pêche énoncée dans n'importe lesquelles des revendications 1 à 4, dans laquelle le rapport desdites première, deuxième et troisième couches est de 1/1/2 en termes de rapport de poids de fibre de carbone contenue dans celles-ci.
